# EUROPÄISCHE PATENTSCHRIFT

(11) **EP 0 903 968 B1**
(45) Veröffentlichungstag und Bekanntmachung des Hinweises auf die Patenterteilung: **12.11.2003**
(21) Anmeldenummer: 97116291.2
(22) Anmeldetag: 18.09.1997
(51) Int. Cl.: H05B 41/36, H02J 9/06

(54) **Beleuchtungssystem**
Lighting system
Système d'éclairage

(43) Veröffentlichungstag der Anmeldung: 24.03.1999
(73) Patentinhaber: CEAG Sicherheitstechnik GmbH, 59494 Soest (DE)
(72) Erfinder: Scharfenberg, Manfred, 59425 Unna (DE)
(74) Vertreter: Grünecker, Kinkeldey, Stockmair & Schwanhäusser Anwaltssozietät

(56) Entgegenhaltungen:
- EP-A- 0 534 793
- EP-A- 0 689 373
- DE-A- 2 947 008
- DE-A- 19 529 750
- GROLL R: "ELEKTRONISCHE VORSCHALTGERAETE - INTEGRATION IN DIE GEBAEUDESYSTEMTECHNIK" ELEKTROTECHNISCHE ZEITSCHRIFT - ETZ, Bd. 114, Nr. 23/24, 1.Dezember 1993, Seiten 1456-1458, 1460/1461, XP000423830

## Beschreibung

Die Erfindung betrifft ein Beleuchtungssystem mit wenigstens einer mit einer Zentraleinrichtung verbundenen Leuchte, die zumindest eine Lichtquelle mit dieser zugeordnetem elektrischen Steuergerät aufweist, welches Netzeingänge zur Spannungsversorgung aufweist

Solche Beleuchtungssysteme sind aus der Praxis für eine Vielzahl von Einsatzgebieten bekannt. Beispiele für solche Einsatzgebiete sind öffentliche Gebäude, Büros, Werkhallen, Theater, Kinos, Wohnanlagen oder dergleichen. In der Regel umfaßt das Beleuchtungssystem eine Vielzahl von Leuchten, die in den verschiedenen Räumen oder auch außerhalb der Gebäude angeordnet sind. Zur Steuerung des Beleuchtungssystems dient vorzugsweise eine Zentraleinrichtung, die entsprechende Prüf- und Überwachungseinrichtungen für die verschiedenen Leuchten und Steuerungseinrichtungen zum Ein- und Ausschalten der Leuchten sowie weitere Einrichtungen wie Anzeigeeinrichtungen für das Beleuchtungssystem usw. aufweisen kann. Die Zentraleinrichtung kann als Leitstelle für ein gesamtes Gebäude oder mehrere Gebäude sowie als dezentrale Einrichtung einer Gebäudeleitstelle für beispielsweise ein Stockwerk eines Gebäudes zuständig sein.

Die Leuchten sind je nach Anforderung in unterschiedlichster Weise insbesondere bezüglich Lichtstrom, Regelung des Lichtstroms, Beleuchtungs-Richtungscharakteristik oder dergleichen ausgelegt. In jeder Leuchte ist zumindest eine Lichtquelle und ein dieser zugeordnetes elektrisches Steuergerät angeordnet

Als Lichtquellen werden aus ökonomischen und ökologischen Gründen heutzutage vorzugsweise Leuchtstofflampen, Metallhalogenidlampen, Natrium- oder Quecksilberdampflampen oder dergleichen eingesetzt. Diese weisen im Vergleich zu üblichen Glühlampen eine verlängerte Einsatzzeit und eine höhere Beleuchtungseffektivität auf. Dabei ergibt sich die Beleuchtungseffektivität als Quotient aus Lichtstrom und Leistungsaufnahme der jeweiligen Lichtquelle.

Das elektrische Steuergerät dient zum Betreiben der entsprechenden Lichtquelle. Für die verschiedenen Lichtquellen sind eine Reihe unterschiedlicher Steuergeräte im Einsatz, wie Vorschaltgeräte in Form von Spulen, Transformatoren, oder dergleichen.

Über das Steuergerät wird eine Spannung zum Betreiben der jeweiligen Lichtquelle dieser zugeführt, wobei das Steuergerät entsprechende Netzeingänge zum Anschließen der Spannungsversorgung aufweist.

Wie bereits vorstehend ausgeführt, sind eine Vielzahl unterschiedlicher Lichtquellen und Steuergeräte im Einsatz, so daß die entsprechenden Beleuchtungssysteme zum Ansprechen und zur Steuerung dieser Leuchten entsprechend aufwendig und kostenintensiv aufgebaut sein müssen. Weiterhin ist bei einem Ersetzen einer Art von Leuchte durch eine andere oder bei einer Erweiterung des Beleuchtungssystems jeweils eine erneute Anpassung bezüglich der neuen Leuchte erforderlich. Weiterhin sind Leuchten mit Steuergeräten ohne Steuereingänge zur Lichtstromregelung nicht oder nur durch weitere Installationen im Beleuchtungssystem beziehungsweise der Zentraleinrichtung bezüglich ihres Lichtstroms regelbar.

Der Erfindung liegt daher die Aufgabe zugrunde, ein Beleuchtungssystem der eingangs genannten Art dahingehend zu verbessern, daß dieses einfacher und kostengünstiger aufgebaut ist und gleichzeitig eine Lichtstromregelung bei allen im Beleuchtungssystem eingebauten Leuchten möglich ist.

Zur Lösung dieser Aufgabe zeichnet sich das eingangs beschriebene Beleuchtungssystem dadurch aus, daß in jeder Leuchte ein zwischen den Netzeingängen des Steuergeräts und Netzanschlüssen der Leuchte verschaltetes Überwachungsadaptermodul angeordnet ist, welches wenigstens einen Spannungswandler zur Regulierung der Spannungsversorgung des Steuergeräts und eine von der Zentraleirichtung gesteuerte Steuerungseinrichtung zur Betätigung des Spannungswandlers aufweist.

Durch das Überwachungsadaptermodul erfolgt eine Anpassung der verschiedenen Leuchten mit unterschiedlichen Lichtquellen und Steuergeräten, so daß diese einheitlich unter Verwendung nur eines Überwachungsadaptermoduls ansprechbar und steuerbar sind. Die Anpassung an die verschiedenen Lichtquellen und Steuergeräte erfolgt dabei im Überwachungsadaptermodul, das heißt innerhalb der entsprechenden Leuchte. Dadurch ist kein erhöhter Installations- oder Ausstattungsumfang im Beleuchtungssystem beziehungsweise der Zentraleinrichtung erforderlich. Jede Leuchte kann auch nachträglich mit dem entsprechenden Überwachungsadaptermodul ausgestattet werden oder dieses wird direkt beim Hersteller der Leuchte eingebaut Um neben der Anpassung der verschiedenen Leuchten gleichzeitig auch in ihrem Lichtstrom nicht regelbare Lichtquellen mit einer Lichtstromregelung zu versorgen, weist das Überwachungsadaptermodul den Spannungswandler auf. Durch diesen ist eine Regulierung der Spannungsversorgung des Steuergerätes und damit des von der Lichtquelle erzeugten Lichtstroms möglich.

Die Regulierung der Spannungsversorgung durch den Spannungswandler kann in diesem Zusammenhang beispielsweise in der Art erfolgen, daß eine insbesondere von der Zentraleinrichtung gesteuerte Steuerungseinrichtung den Spannungswandler betätigt. Auch die Steuerungseinrichtung ist Teil des Überwachungsadaptermoduls. Unter Betätigung des Spannungswandlers ist in diesem Zusammenhang zu verstehen, daß dieser beispielsweise zum Dimmen der Lichtquelle eingeschaltet wird und die Spannungsversorgung des Steuergeräts zur Reduzierung der Ausgangsleistung des Steuergeräts entsprechend vermindert. Ein solches Dimmen der Lichtquelle erfolgt bevorzugt in einem Bereich von zirka 30 bis 100% des Nennlichtstroms der Lichtquelle. Ebenso ist es möglich, daß durch Betätigen des Spannungswandlers eine zusätzliche Spannungsversorgung des Steuergeräts erfolgt, so daß dessen Ausgangsleistung zur Erhöhung des Lichtstroms der Lichtquelle erhöht wird.

Weiterhin ist durch die Steuereinrichtung und deren Steuerung durch die Zentraleinrichtung eine Betätigung des Spannungswandlers zur Regulierung der Spannungsversorgung des Steuergeräte möglich, um beispielsweise einen Notlichtbetrieb der jeweiligen Leuchte zu ermöglichen. Dabei kann der Spannungswandler eine entsprechende Spannungsquelle, insbesondere Gleichspannungsquelle, umfassen, durch die bei Netzausfall die Lichtquelle einen minimal erforderlichen Lichtstrom erzeugt.

Ein solcher Spannungswandler kann in unterschiedlicher Weise aufgebaut sein. Als Beispiel für einen solchen Spannungswandler ist eine Vielzahl von Schaltungen bekannt, die die Eingangsspannung gleichrichten, mit hoher Frequenz zerhacken und wieder gleichrichten, wobei die Ausgangsspannung des Wandlers variabel gesteuert werden kann.

Die Steuergeräte sind in der Regel sowohl durch Wechselspannung als auch durch Gleichspannung betreibbar. In diesem Zusammenhang kann der Spannungswandler vorteilhaft als Wechselspannung - zu -Gleichspannung-Wandler aufgebaut sein. Die Wechselspannung kann dabei über die Netzanschlüsse der Leuchte oder auch separat von einer äußeren Spannungsquelle zugeführt werden. Durch die vom Spannungswandler abgegebene Gleichspannung wird das Steuergerät zur Regulierung des Lichtstroms der Lichtquelle betrieben, wobei die Größe der Gleichspannung durch die Steuereinrichtung über den Spannungswandler regulierbar ist. Dadurch ist das Dimmen der Lichtquelle beispielsweise im Bereich von 30 bis 100% des Nennlichtstroms der Lichtquelle in einfacher Weise möglich.

Um den Einsatzbereich des Spannungswandlers und in diesem Zusammenhang auch des Überwachungsadaptermoduls zu erweitern, kann der Spannungswandler auch als Wechsel-/Gleichspannung-zu-Gleichspannung-Wandler aufgebaut sein. In diesem Fall ist sowohl aus einer Wechsel- als auch aus einer zugeführten Gleichspannung durch die Steuereinrichtung die Größe der vom Spannungswandler abgegebenen Gleichspannung zur Einstellung des Lichtstroms der Lichtquelle über das Steuergerät regulierbar.

Der Spannungswandler kann über eine eigene Spannungsversorgung von außerhalb der Leuchte verfügen. Als günstig bezüglich eines vereinfachten Aufbaus der Leuchte und insbesondere des Überwachungsadaptermoduls ist anzusehen, wenn das Überwachungsadaptermodul eine Leitungsverbindung zwischen Netzeingängen des Steuergeräts und Netzanschlüssen der Leuchte aufweist, welcher der Spannungswandler zugeordnet ist Auf diese Weise kann die Spannungsversorgung des Spannungswandlers über die Leitungsverbindung und damit über die Netzanschlüsse der Leuchte erfolgen.

Der Spannungswandler kann mit der Leitungsverbindung nur bei seiner Betätigung verbunden werden. Als vorteilhaft ist anzusehen, wenn der Spannungswandler mit der Leitungsverbindung verbundene Eingänge und mit Netzeingängen des Steuergeräts verbindbare Ausgänge aufweist. Auf diese Weise erfolgt nur zwischen Netzeingängen des Steuergeräts und Ausgängen des Spannungswandlers eine Verbindung zur Betätigung und zum Einsatz des Spannungswandlers.

Ein einfaches Ausführungsbeispiel kann sich dadurch auszeichnen, daß der Spannungswandler parallel zur Leitungsverbindung verschaltbar ist und wenigstens einer seiner Eingänge mittels einer Umschalteinrichtung mit einem Netzeingang des Steuergeräts verbindbar ist.

Die elektrischen Steuergeräte können, wie bereits eingehend erwähnt, in unterschiedlichster Weise aufgebaut sein. Ökologische und ökonomische Vorteile weisen Steuergeräte auf, die beispielsweise als elektronisches Vorschaltgerät oder elektronischer Transformator ausgebildet sind. Diese zeigen einen geringen Energieverlust, eine geringe Energieaufnahme, eine hohe Beleuchtungseffektivität seitens der Lichtquelle, einen geringen Temperaturanstieg, eine Verlängerung der Lebensdauer der Lichtquelle und verlängerte Wartungsintervalle. Elektronische Vorschaltgeräte werden beispielsweise für Leuchtstofflampen und Metallhalogenidlampen und elektronische Transformatoren für insbesondere Halogenlampen eingesetzt.

Um in einfacher Weise mit der Zentraleinrichtung zum Austausch von Informationen und Befehlsignalen in Verbindung zu stehen, kann das Überwachungsadaptermodul zur Verbindung mit der Zentraleinrichtung über eine Datenleitung eine Datenleitungsschnittstelle aufweisen.

Um in diesem Zusammenhang eine Verbindung zu unterschiedlich strukturierten oder konfigurierten Datenleitungen oder Datenbussen aufbauen zu können, kann die Datenleitungsschnittstelle als Multifunktionsschnittstelle ausgebildet sein. Die Multifunktion der Datenleitungsschnittstelle kann sowohl hardware- als auch softwaremäßig realisiert werden. Über die Datenleitung und das Überwachungsadaptermodul kann auf diese Weise ohne weitere Anpassung der verschiedenen Leuchten eine zentrale Kontrolle der verschiedenen Funktionen der Leuchte im Netz- und Notbetrieb mittels der Zentraleinrichtung oder ihr untergeordneter, dezentraler Einrichtungen durchgeführt werden. Außerdem kann von der Zentraleinrichtung eine Steuerung verschiedener Schaltungsarten der Leuchten durchgeführt werden, wie Bereitschaftsschaltung und Dauerschaltung. In der Bereitschaftsschaltung leuchtet die angesprochene Leuchte beispielsweise nur bei Netzausfall und bei Dauerschaltung leuchtet die entsprechende Leuchte sowohl bei Netz- als auch Notbetrieb.

Wenn der Leitungsverbindung wenigstens ein steuerbarer Unterbrechungsschalter zugeordnet ist, kann über das Überwachungsadaptermodul die Leuchte ein- und ausgeschaltet werden. Dies ist beispielsweise dann von Vorteil, wenn Leuchten zur Fluchtweglenkung eingesetzt werden, wobei nur diejenigen Leuchten betrieben werden, die entlang des aktuell verfügbaren Fluchtweges angeordnet sind. Alle übrigen Leuchten werden ausgeschaltet.

Weiterhin kann durch den Unterbrechungsschalter ein Ein- und Ausschalten der Leuchten in Abhängigkeit einer Nutzung des Gebäudes über das Gebäudeleitsystem oder die Zentraleinrichtung erfolgen. Eine solche Nutzung ist beispielsweise eine Nachtwächterbeleuchtung, bei der nur definierte Leuchten in Fluren und Treppenhäusern des Gebäudes eingeschaltet sind. Weiterhin kann durch den Unterbrechungsschalter beispielsweise bei Vorführungen in Kinos und Theatern eine Dunkelschaltung der Leuchten erfolgen.

Eine günstige Betätigung des Unterbrechungsschalters und auch der Schalteinrichtung zum Verbinden von Spannungswandler und Schaltgerät ergibt sich bei einem Ausführungsbeispiel, bei dem der Unterbrechungsschalter und/oder die Schalteinrichtung ein Relais aufweisen. Durch dessen elektrische Betätigung ist ein entsprechendes Ein- und Ausschalten des Unterbrechungsschalters beziehungsweise ein Umschalten der Umschalteinrichtung möglich.

Um die Relais und verschiedenen Schalter von Innerhalb des Überwachungsadaptermoduls in einfacher Weise zu betätigen, kann die Steuerungseinrichtung zumindest Steuerausgänge zur Verbindung mit dem Unterbrechungsschalter und/oder der Umschalteinrichtung und/oder dem Spannungswandler und einen Eingang zur Verbindung mit der Datenleitungsschnittstelle aufweisen. Auf diese Weise werden alle Vorgänge innerhalb der Leuchte von der Steuerungseinrichtung gesteuert, welche wiederum über die Datenleitung und die Datenleitungsschnittstelle des Überwachungsadaptermoduls von außen gesteuert werden kann.

Aufgrund dieser Steuerung und Verbindung zwischen Steuerungseinrichtung und Zentraleinrichtung ist beispielsweise auch ein Austausch von Informationen zwischen Leuchte und Zentraleinrichtung möglich, um beispielsweise die Betriebsdauer einer Leuchte, deren Funktion oder dergleichen zentral zu registrieren. Dadurch wird die Überwachung des Beleuchtungssystems erheblich vereinfacht, wobei der Informationsaustausch erfindungsgemäß durch das einheitliche Überwachungsadaptermodul auch bei unterschiedlichen Typen von Leuchten vereinfacht und vereinheitlicht wird.

Um die Lebensdauer und gleichzeitig Beleuchtungseffektivität einer Lichtquelle zu erhöhen, kann das elektrische Steuergerät ein Hochfrequenz-Steuergerät sein, das beispielsweise eine 50 Hz-Spannungsversorgung von außen in eine hochfrequente Wechselspannung von 30 bis 200 kHz umwandelt.

Um bei einem Netzausfall zumindest einige der Leuchten des Beleuchtungssystems weiterhin betreiben zu können, kann das elektrische Steuergerät mit einer Notversorgungsspannungsquelle insbesondere zur Notbeleuchtung bei Netzausfall verbindbar sein. Eine solche Notversorgungsspannungsquelle kann eine Gleichspannungsquelle sein, zum Beispiel eine Batterie innerhalb der Zentraleinrichtung oder in einer dieser zugeordneten dezentralen Einrichtung ausgebildet ist Auch bei Versorgung mit Gleichspannung kann über den Spannungswandler ein Dimmen der Lichtquelle oder ein Ausschalten der Leuchte durch das Überwachungsadaptermodul erfolgen.

Da in dem erfindungsgemäßen Beleuchtungssystem in der Regel eine Vielzahl von Leuchten angeordnet und mit einer Zentraleinrichtung verschaltet sind, ist es zum gezielten Ansprechen und Informationsaustausch von einer Leuchte beziehungsweise zwischen Zentraleinrichtung und jeweiliger Leuchte erforderlich, daß die Leuchten von der Zentraleinrichtung ansprechbar sind. Dies kann in einfachster Weise dadurch erfolgen, daß das Überwachungsadaptermodul einen Adressenspeicher aufweist. In diesem ist eine der entsprechenden Leuchte zugeordnete Adresse ablegbar und über diese Adresse ist die Leuchte von der Zentraleinrichtung ansprechbar. Ebenso können unterAngabe dieser Adresse Informationen von der Leuchte an die Zentraleinrichtung übermittelt werden.

Bei einem vorteilhaften Ausführungsbeispiel des Beleuchtungssystems kann die Zuordnung einer Adresse zur Leuchte durch Eigenzuordnung erfolgen. Dies erfolgt beispielsweise dadurch, daß die Zentraleinrichtung über die Datenleitung Adressen übermittelt und eine noch nicht adressierte oder adressierbare Leuchte sich eine noch nicht zugeordnete Adresse selbst zuordnet und diese Zuordnung der Zentraleinrichtung mitteilt.

Eine vereinfachte Anordnung einer Vielzahl von Leuchte ist dadurch realisierbar, wenn eine Vielzahl von Leuchten mit jeweils zugeordnetem Überwachungsadaptermodul parallel bezüglich Netzleitungen und/oder Datenleitungen verschaltet sind. In diesem Zusammenhang ist darauf hinzuweisen, daß auf separate Datenleitungen beispielsweise dann verzichtet werden kann, wenn die Netzleitungen gleichzeitig als Datenleitungen ausgebildet sind. Dies kann beispielsweise dadurch erfolgen, daß die entsprechenden Datensignale der Netzspannung überlagert und durch entsprechende Einrichtungen im Überwachungsadaptermodul separiert und wiederhergestellt werden.

Das erfindungsgemäße Beleuchtungssystem kann dadurch weiter ausgestaltet werden, daß in oder an einer Leuchte weitere Sensoren, wie Anwesenheitssensor, Tageslichtsensor, Bewegungssensor, Infrarotsensor oder dergleichen angeordnet und insbesondere mit dem Überwachungsadpatermodul verschaltet sind. Der Infrarotsensor kann beispielsweise zur Fernsteuerung der Leuchte über das Überwachungsadpatermodul dienen und mittels des Tageslichtsensors kann eine tageslichtabhängige Steuerung des Beleuchtungsniveaus durch die Leuchte erfolgen.

Das gesamte Überwachungsadpatermodul ist durch eine integrierte Schaltung mit entsprechenden Bauelementen realisierbar. Insbesondere kann die Steuereinrichtung ein Logikbaustein, ein Mikroprozessor oder ein sogenannter Asic sein.

Im folgenden wird ein vorteilhaftes Ausführungsbeispiel der Erfindung anhand der in der Zeichnung beigefügten Figuren näher erläutert

Es zeigen:
- Figur 1: eine prinzipielle Darstellung einer Leuchte des erfindungsgemäßen Beleuchtungssystems, und
- Figur 2: eine Prinzipdarstellung eines erfindungsgemäßen Beleuchtungssystems mit einer Vielzahl von Leuchten nach Figur 1.

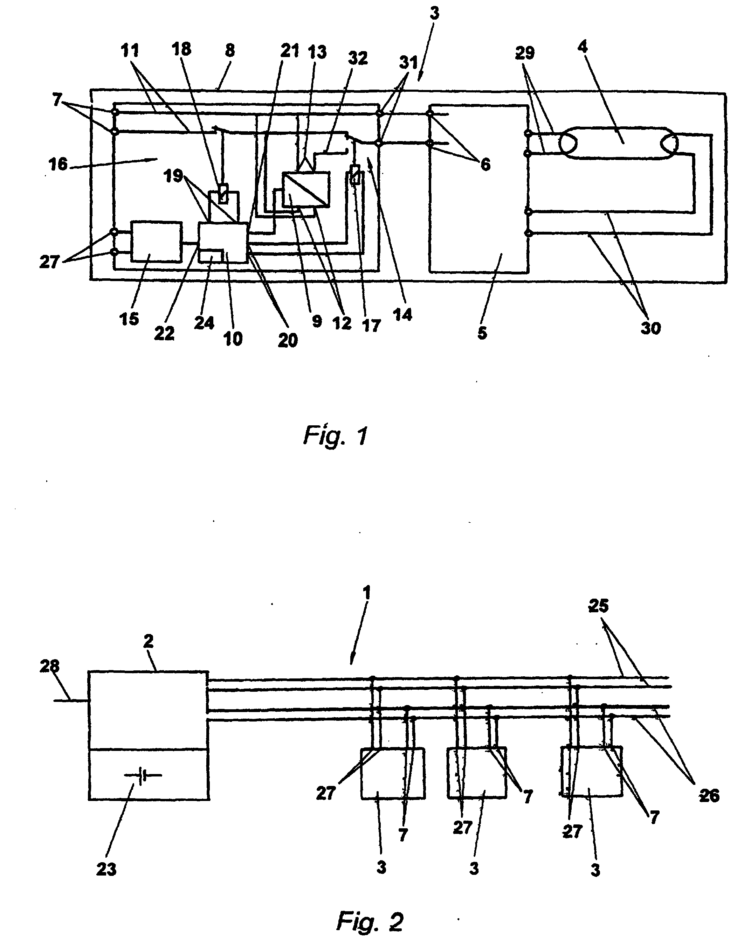

Figur 1 zeigt eine prinzipielle Darstellung einer Leuchte 3 eines erfindungsgemäßen Beleuchtungssytems 1, siehe Figur 2.

Eine solche Leuchte 3 weist eine über Verbindungsleitungen 29, 30 mit einem elektronischen Vorschaltgerät als elektrischem Steuergerät 5 verbundene Lichtquelle 4 in ihrem Inneren auf. Mit dem Steuergerät 5 ist ein Überwachungsadpatermodul 8 über Netzeingänge 6 des Steuergeräts 5 und Netzausgänge 31 des Moduls 8 verbunden.

Das Überwachungsadpatermodul 8 ist ebenfalls innerhalb der Leuchte 3 angeordnet und weist Netzanschlüsse 7 und Datenleitungseingänge 27 auf. Die Netzanschlüsse 7 und Datenleitungseingänge 27 können ebenfalls in der Leuchte 3 ausgebildet sein, wobei in diesem Fall das Überwachungsadaptermodul 8 entsprechend mit diesen Eingängen verbunden ist.

Das Überwachungsadaptermodul 8 weist eine Leitungsverbindung 11 zwischen Netzanschlüssen 7 und Netzausgängen 31 zur Spannungsversorgung des Steuergeräts 5 auf. Eine Leitung der Leitungsverbindung 11 ist durch einen steuerbaren Unterbrechungsschalter 16 unterbrechbar. Dieser umfaßt ein Relais 18, das über Verbindungsleitungen mit Steuerausgängen 19 einer Steuerungseinrichtung 10 des Überwachungsadpatermoduls 8 verbunden ist. Im wesentlichen parallel zur Leitungsverbindung 11 ist ein Spannungswandler 9 angeordnet, der über Eingänge 12 mit den beiden Leitungen der Leitungsverbindung 11 und über Ausgänge 13 mit einer Leitung der Leitungsverbindung 11 und über eine Umschalteinrichtung 14 mit einem Netzausgang 31 beziehungsweise dem Steuergerät 5 verbindbar ist. Der Spannungswandler 9 ist als Wechselspannung-zu-Gleichspannung-Wandler oder Wechselspannung/Gleichspannung-zu-Gleichspannung-Wandler ausgebildet Über die Eingänge 12 ist dem Spannungswandler 9 Wechselspannung beziehungsweise Gleichspannung über die Leitungsverbindung 11 zuführbar und diese ist als Gleichspannung über eine Leitung der Leitungsverbindung 11 und Anschlußleitung 32 mittels der Umschalteinrichtung 14 dem Steuergerät 5 zuführbar.

Die Umschalteinrichtung 14 weist einen Umschalter auf, der zwischen einer Leitung der Leitungsverbindung 11 und der Anschlußleitung 32 des Spannungswandlers 9 hin- und her schaltbar ist. Die Umschalteinrichtung 14 weist weiterhin ein Relais 17 auf, das den Schalter betätigt und über Verbindungsleitungen mit Steuerausgängen 20 der Steuerungseinrichtung 10 verbunden ist Ein weiterer Steuerausgang 21 der Steuerungseinrichtung 10 ist mit dem Spannungswandler 9 zu dessen Betätigung verschaltet. Über diesen Steuerausgang 21 erfolgt beispielsweise eine Einstellung des vom Spannungswandler 9 an Steuergerät 5 abgegebenen Spannungspegel und damit eine Steuerung der Ausgangsleistung des Steuergerätes beziehungsweise des Lichtstroms der Lichtquelle 4.

In der Steuerungseinrichtung 10 ist ein Adressenspeicher 24 enthalten, in dem eine Adresse abspeicherbar ist, über die die Leuchte 3 von der Zentraleinrichtung 2, siehe Figur 2, ansprechbar ist.

Über einen Eingang 22 ist die Steuerungseinrichtung 10 mit einer Datenleitungsschnittstelle 15 verbunden. Diese wiederum ist mit den Datenleitungseingängen 27 und über diese mit Datenleitungen 26, siehe Figur 2, verbunden. An die Netzanschlüsse 7 sind entsprechend Netzleitungen 25, siehe ebenfalls Figur 2, anschließbar.

In Figur 2 ist eine Prinzipdarstellung eines Teils eines erfindungsgemäßen Beleuchtungssystems 1 mit einer Vielzahl von Leuchten 3 nach Figur 1 dargestellt.

Bei dem erfindungsmäßen Beleuchtunssystem 1 sind die verschiedenen Leuchten parallel mit den Netzleitungen 25 und Datenleitungen 26 mittels ihrer entsprechenden Eingänge 7, 27 verschaltet. Die Netzleitungen 25 und Datenleitungen 26 führen zur Zentraleinrichung 2, die mit einer zentralen Netzversorgung 28 verbunden ist Weiterhin ist in der Zentraleinrichtung 2 eine Notversorgungsspannungsquelle 23 zur Versorgung der oder einiger Leuchten 3 im Falle eines Netzausfalls angeordnet.

In folgenden wird kurz die Betriebsweise des erfindungsgemäßen Beleuchtungssystems erläutert.

Ein einheitliches Überwachungsadaptermodul 8 ist jeder Leuchte 3 zugeordnet, um zwischen dieser und der Zentraleinrichtung 2 eine Kommunikation ohne erhöhten Installationsaufwand im Beleuchtungssystem 1 zu ermöglichen. Das Überwachungsadaptermodul 8 stellt sicher, daß über Netzanschlüsse 7 und Datenleitungsanschlüsse 27 jede Leuchte 3 einheitlich von der Zentraleinrichtung 2 angesprochen werden kann. Weiterhin wird durch das Überwachungsadaptermodul 8 ein Dimmen beziehungsweise Ein- und Ausschalten der jeweiligen Leuchte 3 ermöglicht, auch wenn solche Funktionen von sich aus nicht durch Steuergerät 5 beziehungsweise Lichtquelle 4 einer jeden Leuchte möglich sind.

Beispielsweise zum Dimmen einer Leuchte 3 wird im Überwachungsadaptermodul 8 mittels der Steuereinrichtung 10 ein Spannungswandler 9 betätigt und mittels einer Umschalteinrichtung 14 ein Netzeingang 6 des Steuergeräts 5 mit einer Anschlußleitung 32 des Spannungswandlers verbunden. Der andere Netzeingang 6 des Steuergeräts 5 bleibt weiterhin über die Leitungsverbindung 11 direkt mit der entsprechenden Netzleitung 25 verbunden.

Durch den Spannungswandler 9 wird gesteuert über Steuerausgang 21 der Steuereinrichtung 10 eine über die Netzleitung 25 zugeführte Wechsel- oder Gleichspannung in eine Gleichspannung mit einstellbarer Größe umgewandelt. Durch entsprechende Einstellung dieses Spannungswerts wird die Ausgangsleistung des Steuergeräts 5 und damit der von der Lichtquelle 4 erzeugte Lichtstrom beeinflußt.

Weiterhin ist es mittels des ebenfalls von der Steuerrichtung 10 betätigbaren Unterbrechungsschalter 16 möglich, die Spannugnsversorgung über Leitungsverbindung 11 zum Steuergerät 5 insgesamt zu unterbrechen, so daß über das Überwachungsadaptermodul 8 die Leuchte ein- aussschaltbar ist.

Weitere Sensoren, wie Tageslichtsensor, Bewegungssensor, Infrarotsensor oder dergleichen, die ebenfalls an oder in der Leuchte 3 angeordnet und von dem Überwachunsadaptermodul 8 überwacht und ausgewertet werden können, sind zur Vereinfachung nicht dargestellt.

Ergänzend sei angemerkt, daß bei einem Steuergerät 5 mit zusätzlichen Steuereingängen zur Regulierung dessen Ausgangsspannung, die Steuereinrichtung 10 auch direkt beispielsweise mit ihren Steuerausgängen 20 mit den entsprechenden Steuereingängen des Steuergerät 5 verbindbar ist, wobei auf Umschalteinrichtung 14 und Spannungswandler 9 verzichtet werden kann. Über diese Steuerausgänge 20 ist durch die Steuerungseinrichtung 10 und gesteuert durch Zentraleinrichtung 2 in diesem Fall einedirekte Steuerung der Ausgangsleistung des Steuergeräts 5 und damit des von der Lichtquelle 4 abgegebenen Lichtstroms zum Dimmen oder dergleichen möglich.

Das heißt, je nach Ausbildung des Steuergeräts 5 wird ein Überwachungsadaptermodul 8 mit oder ohne Spannungswandler 9 und Umschalteinrichtung 14 eingesetzt.

## Patentansprüche

1. Beleuchtungssystem (1) mit wenigstens einer mit einer Zentraleinrichtung (2) verbundenen Leuchte (3), die zumindest eine Lichtquelle (4) mit dieser zugeordnetem elektrischen Steuergerät (5) aufweist, welches Netzeingänge (6) zur Spannungsversorgung aufweist,
**dadurch gekennzeichnet,**
**daß** in jeder Leuchte (3) ein zwischen den Netzeingängen (6) des Steuergeräts (5) und Netzanschlüssen (7) der Leuchte (3) verschaltetes Überwachungsadaptermodul (8) angeordnet ist, welches wenigstens einen Spannungswandler (9) zur Regulierung der Spannungsversorgung und eine von der Zentraleinrichtung (2) gesteuerte Steuerungseinrichtung (10) zur Betätigung des Spannungswandlers (9) aufweist.

2. Beleuchtungssystem nach Anspruch 1,
**dadurch gekennzeichnet,**
**daß** der Spannungswandler (9) ein Wechsel-/Gleichspannung zu GleichspannungWandler ist.

3. Beleuchtungssystem nach wenigstens einem der vorangehenden Ansprüche,
**dadurch gekennzeichnet,**
**daß** das Überwachungsadaptermodul (8) eine Leitungsverbindung (11) zwischen Netzeingängen und (6) und Netzanschlüssen (7) aufweist, welcher der Spannungswandler (9) zugeordnet ist.

4. Beleuchtungssystem nach wenigsten einem der vorangehenden Ansprüche,
**dadurch gekennzeichnet,**
**daß** der Spannungswandler (9) mit der Leitungsverbindung (11) verbundene Eingänge (12) und mit den Netzeingängen (6) des Steuergeräts (5) verbindbare Ausgänge (13) aufweist.

5. Beleuchtungssystem nach wenigstens einem der vorangehenden Ansprüche,
**dadurch gekennzeichnet,**
**daß** der Spannungswandler (9) parallel zur Leitungsverbindung (11) verschaltbar ist und wenigstens ein Eingang (12) mittels einer Umschalteinrichtung (14) mit einem Netzeingang (6) des Steuergeräts (5) verbindbar ist.

6. Beleuchtungssystem nach wenigstens einem der vorangehenden Ansprüche,
**dadurch gekennzeichnet,**
**daß** das elektrische Steuergerät (5) ein elektronisches Vorschaltgerät ist.

7. Beleuchtungssystem nach wenigstens einem der vorangehenden Ansprüche,
**dadurch gekennzeichnet,**
**daß** das Überwachungsadaptermodul (8) zur Verbindung mit der Zentraleinrichtung (2) Ober eine Datenleitung (26) eine Datenleitungsschnittstelle (15) aufweist.

8. Beleuchtungssystem nach wenigstens einem der vorangehenden Ansprüche,
**dadurch gekennzeichnet,**
**daß** der Leitungsverbindung (11) wenigstens ein steuerbarer Unterbrechungsschalter (16) zugeordnet.

9. Beleuchtungssystem nach wenigstens einem der vorangehenden Ansprüche, da**dadurch gekennzeichnet,**
**daß** der Unterbrechungsschalter (16) und/oder die Umschalteinrichtung (14) ein Relais (17,18) aufweist.

10. Beleuchtungssystem nach wenigstens einem der vorangehenen Ansprüche,
**dadurch gekennzeichnet,**
**daß** die Steuerungseinrichtung (10) zumindest Steuerausgänge (19, 20, 21) zur Verbindung mit dem Unterbrechungsschalter (16) und/oder der Umschalteinrichtung (14) und/oder dem Spannungswandler (9) und einen Eingang (22) zur Verbindung mit der Datenleitungsschnittstelle (15) aufweist.

11. Beleuchtungssystem nach wenigstens einem der vorangehenden Ansprüche,
**dadurch gekennzeichnet,**
**daß** die Datenleitungsschnittstelle (15) eine Multifunktionsschnittstelle ist.

12. Beleuchtungssystem nach wenigstens einem der vorangehenden Ansprüche,
**dadurch gekennzeichnet,**
**daß** das elektrische Steuergerät (5) ein Hochfrequenz-Steuergerät ist.

13. Beleuchtungssystem nach wenigstens einem der vorangehenden Ansprüche,
**dadurch gekennzeichnet,**
**daß** das elektrische Steuergerät (5) mit einer Notversorgungsspannungsquelle (23) insbesondere zur Notbeleuchtung bei Netzausfall verbindbar ist.

14. Beleuchtunssystem nach wenigstens einem der vorangehenden Ansprüche,
**dadurch gekennzeichnet,**
**daß** das Überwachungsadaptermodul (8) einen Adressenspeicher (24) insbesondere zur Eigenzuordnung einer von der Zentraleinrichtung (2) ansprechbaren Adresse aufweist.

15. Beleuchtungssystem nach wenigstens einem der vorangehenden Ansprüche,
**dadurch gekennzeichnet,**
**daß** eine Vielzahl von Leuchten (3) mit jeweils zugeordnetem Überwachungsadaptermodul (8) parallel bezüglich Netzleitungen (25) und/oder Datenleitungen (26) verschaltet sind.

16. Beleuchtungssystem nach wenigstens einem der vorangehenen Ansprüche,
**dadurch gekennzeichnet,**
**daß** in oder an der Leuchte (3) weitere Sensoren, wie Anwesenheitssensor, Tageslichtsensor, Bewegungssensor, Infrarotsensor oder dergleichen, angeordnet und insbesondere mit dem Überwachungsadaptermodul verschaltet sind.

17. Beleuchtungssystem nach wenigstens einem der vorangehenden Ansprüche,
**dadurch gekennzeichnet,**
**daß** die Steuereinrichtung (10) ein Logikbaustein oder Mikroprozessor ist.

## Claims

1. Lighting system (1) with at least one lamp (3) connected to a central device (2), the lamp having at least one light source (4) with an electric controller (5) allocated thereto, which has mains inputs (6) for the power supply, **characterised in that** arranged in each lamp (3) is a monitoring adapter module (8) which is disposed between the mains inputs (6) of the controller (5) and mains connections (7) of the lamp (3) and has at least one voltage converter (9) for regulating the power supply and a control device (10) controlled by the central device (2) for actuating the voltage converter (9).

2. Lighting system according to claim 1, **characterised in that** the voltage converter (9) is an AC/DC to DC converter.

3. Lighting system according to at least one of the preceding claims, **characterised in that** the monitoring adaptor module (8) has a circuit connection (11) between the mains inputs (6) and the mains connections (7), allocated to the voltage converter (9).

4. Lighting system according to at least one of the preceding claims, **characterised in that** the voltage converter (9) has inputs (12) connected to the circuit connection (11) and outputs (13) which can be connected to the mains inputs (6) of the controller (5).

5. Lighting system according to at least one of the preceding claims, **characterised in that** the voltage converter (9) can be disposed parallel to the circuit connection (11) and at least one input (12) can be connected by means of a switchover device (14) to a mains input (6) of the controller (5).

6. Lighting system according to at least one of the preceding claims, **characterised in that** the electric controller (5) is an electronic ballast.

7. Lighting system according to at least one of the preceding claims, **characterised in that** the monitoring adaptor module (8) for connecting to the central device (2) via a data circuit (26) has a data circuit interface (15).

8. Lighting system according to at least one of the preceding claims, **characterised in that** at least one controllable interrupt initiation switch (16) is allocated to the circuit connection (11)

9. Lighting system according to at least one of the preceding claims, **characterised in that** the interrupt initiation switch (16) and/or the switchover device (14) has a relay (17, 18).

10. Lighting system according to at least one of the preceding claims, **characterised in that** the control device (10) has at least control outputs (19, 20, 21) for connecting to the interrupt initiation switch (16) and/or the switchover device (14) and/or the voltage converter (9) and an input (22) for connecting to the data circuit interface (15).

11. Lighting system according to at least one of the preceding claims, **characterised in that** the data circuit interface (15) is a multi-functional interface.

12. Lighting system according to at least one of the preceding claims, **characterised in that** the electric controller (5) is a high frequency controller.

13. Lighting system according to at least one of the preceding claims, **characterised in that** the electric controller (5) can be connected to an emergency supply voltage source (23), in particular for emergency lighting in the event of mains power failure.

14. Lighting system according to at least one of the preceding claims, **characterised in that** the monitoring adapter module (8) has an address memory (24), in particular for self-allocation of an address which can be actuated by the central device (2).

15. Lighting system according to at least one of the preceding claims, **characterised in that** a multiplicity of lamps (3) with an allocated monitoring adapter module (8) in each case is disposed parallel in respect of mains power lines (25) and/or data circuits (26).

16. Lighting system according to at least one of the preceding claims, **characterised in that** further sensors, such as presence sensor, daylight sensor, movement sensor, infrared sensor or similar, are arranged in or on the lamp (3) and in particular connected to the monitoring adapter module.

17. Lighting system according to at least one of the preceding claims, **characterised in that** the control device (10) is a logic component or a microprocessor.

## Revendications

1. Système d'éclairage (1) avec au moins une lampe (3) reliée à un dispositif central (2), laquelle lampe présente au moins une source lumineuse (4) avec un appareil de commande électrique (5) qui lui est affecté, lequel appareil de commande présente des entrées de réseau (6) destinées à l'alimentation en tension, **caractérisé en ce que**, dans chaque lampe (3), est disposé un module d'adaptateur de surveillance (8) branché entre les entrées de réseau (6) de l'appareil de commande (5) et des connexions de réseau (7) de la lampe (3), lequel module contient au moins un transformateur de courant (9) pour réguler l'alimentation en tension et un dispositif de commande (10) commandé par ce dispositif central (2) pour actionner le transformateur de courant (9).

2. Système d'éclairage selon la revendication 1, **caractérisé en ce que** le transformateur de courant (9) est un transformateur tension alternative / continue en tension continue.

3. Système d'éclairage selon au moins l'une quelconque des revendications précédentes, **caractérisé en ce que** le module d'adaptateur de surveillance (8) présente une ligne de jonction (11) entre les entrées de réseau (6) et les connexions de réseau (7), qui est raccordée au transformateur de tension (9).

4. Système d'éclairage selon au moins l'une quelconque des revendications précédentes, **caractérisé en ce que** le transformateur de tension (9) présente des entrées (12) reliées à la ligne de jonction (11) et des sorties (13) pouvant être reliées aux entrées de réseau (6) de l'appareil de commande (5).

5. Système d'éclairage selon au moins l'une quelconque des revendications précédentes, **caractérisé en ce que** le transformateur de tension (9) peut être branché en parallèle avec la ligne de jonction (11) et au moins une entrée (12) peut être reliée à une entrée de réseau (6) d'un appareil de commande (5) à l'aide d'un dispositif de commutation.

6. Système d'éclairage selon au moins l'une quelconque des revendications précédentes, **caractérisé en ce que** l'appareil de commande électrique (5) est un ballast électronique.

7. Système d'éclairage selon au moins l'une quelconque des revendications précédentes, **caractérisé en ce que** le module d'adaptateur de surveillance (8) présente une interface de ligne de données (15) pour assurer la liaison avec le dispositif central (2) sur une ligne de données (26).

8. Système d'éclairage selon au moins l'une quelconque des revendications précédentes, **caractérisé en ce qu'**au moins un disjoncteur (16) réglable est raccordé à la ligne de jonction (11).

9. Système d'éclairage selon au moins l'une quelconque des revendications précédentes, **caractérisé en ce que** le disjoncteur (16) et / ou le dispositif de commutation (14) présente un relais (17, 18).

10. Système d'éclairage selon au moins l'une quelconque des revendications précédentes, **caractérisés en ce que** le dispositif de commande (10) présente au moins des sorties de commande (19, 20, 21) pour assurer la liaison avec le disjoncteur (16) et / ou le dispositif de commutation (14) et / ou le transformateur de tension (9) et une entrée (22) pour assurer la liaison avec l'interface de la ligne de données (15).

11. Système d'éclairage selon au moins l'une quelconque des revendications précédentes, **caractérisés en ce que** l'interface de la ligne de données (15) est une interface multifonction.

12. Système: d'éclairage selon au moins l'une quelconque des revendications précédentes, **caractérisés en ce que** l'appareil de commande électrique (5) est un appareil de commande haute fréquence.

13. Système d'éclairage selon au moins l'une quelconque des revendications précédentes, **caractérisés en ce que** l'appareil de commande électrique (5) peut être relié à une source de tension d'alimentation de secours (23), en particulier pour garantir un éclairage de secours en cas de panne d'alimentation.

14. Système d'éclairage selon au moins l'une quelconque des revendications précédentes, **caractérisés en ce que** le module d'adaptateur de surveillance (8) présente une mémoire d'adresses (24) en particulier pour affecter individuellement une adresse pouvant être activée par le dispositif central (2).

15. Système d'éclairage selon au moins l'une quelconque des revendications précédentes, **caractérisés en ce qu'**une pluralité de lampes (3) sont branchées respectivement à un module d'adaptateur de surveillance (8) raccordé en parallèle par rapport aux lignes de jonction (25) et / ou aux lignes de données (26).

16. Système, d'éclairage selon au moins l'une quelconque des revendications précédentes, **caractérisés en ce que** dans ou sur la lampe (3) sont disposés d'autres détecteurs, tels qu'un détecteur de présence, un détecteur de la lumière du jour, détecteur de mouvement, un détecteur de lumière infrarouge ou similaire, et ils sont en particulier branchés au modulé d'adaptateur de surveillance.

17. Système d'éclairage selon au moins l'une quelconque des revendications précédentes, **caractérisés en ce que** le dispositif de commande (10) est un élément logique ou un microprocesseur.
